# FASCICULE DE BREVET EUROPEEN

(11) **EP 0 705 748 B1**
(45) Date de publication et mention de la délivrance du brevet: **29.12.1997**
(21) Numéro de dépôt: 95401900.6
(22) Date de dépôt: 17.08.1995
(51) Int. Cl.: B60T 13/12, B60T 13/14

(54) **Servomoteur hydraulique d'assistance au freinage à caractéristique d'entrée modifiée**
Hydraulischer Brennkraftverstärker mit verbesserter Eingangscharakteristik
Hydraulic servo brake booster with modified input characteristic

(30) Priorité: 04.10.1994 FR 9411819
(43) Date de publication de la demande: 10.04.1996
(73) Titulaire: Bosch Systemes de Freinage, 93700 Drancy (FR)
(72) Inventeur: Castel, Philippe, F-75005 Paris (FR); Pressaco, Pierre, F-93120 La Courneuve (FR)
(74) Mandataire: Bentz, Jean-Paul

(56) Documents cités:
- FR-A- 2 539 366
- US-A- 5 036 665

## Description

La présente invention concerne un servomoteur hydraulique d'assistance au freinage, comprenant d'une part un boîtier étanche délimité par au moins une paroi, et d'autre part une tige de commande montée à coulissement étanche dans une ouverture de cette paroi et susceptible, à partir d'une position de repos, d'être enfoncée à l'intérieur du boîtier sous l'effet d'un force d'entrée pour ouvrir progressivement une communication entre l'intérieur de ce boîtier et une source de pression auxiliaire, la pression délivrée par cette source exerçant sur la tige de commande une réaction s'opposant à la force d'entrée.

Un servomoteur de ce type est par exemple décrit dans le brevet US-4 641 497 qui correspond au brevet français FR-2 559 724.

Les servomoteurs d'assistance au freinage actuellement connus peuvent être classés dans la catégorie des servomoteurs pneumatiques ou des servomoteurs hydrauliques, selon qu'ils utilisent la pression auxiliaire d'un gaz, traditionnellement l'atmosphère, ou celle d'un liquide.

Bien que chacune de ces deux catégories de servomoteurs présente des avantages qui lui sont propres, les servomoteurs pneumatiques sont plus largement exploités que les autres en raison de leur coût de fabrication relativement faible.

Pour cette raison, les conducteurs de véhicules se sont surtout habitués aux sensations de pédale de frein qui sont associées à l'utilisation de servomoteurs pneumatiques, et beaucoup moins aux sensations de pédale de frein, assez différentes, qui sont associées à l'utilisation de servomoteurs hydrauliques.

Dans ce contexte, la présente invention a pour but de proposer un servomoteur hydraulique offrant, au conducteur qui actionne la pédale de frein, une sensation très semblable à celle qu'offre un servomoteur pneumatique.

A cette fin, le servomoteur de l'invention est essentiellement caractérisé en ce qu'il comporte en plus des éléments énoncés dans le préambule ci-dessus : un manchon cylindrique interposé entre l'ouverture de la paroi et la tige de commande et coulissant de façon étanche par rapport à cette ouverture et à cette tige; une butée s'opposant au coulissement du manchon vers l'extérieur du boîtier; et des moyens de réaction différée pour transmettre à la tige de commande, lorsqu'elle a parcouru une course non nulle depuis sa position de repos, une partie au moins de la force exercée sur le manchon par la pression régnant à l'intérieur du boîtier.

De préférence, les moyens de réaction différée comprennent au moins des moyens d'entraînement différé pour permettre à la tige de commande, lorsqu'elle a parcouru une course de longueur non nulle depuis sa position de repos, d'entraîner le manchon à l'intérieur du boîtier, ces moyens d'entraînement différé étant par exemple essentiellement constitués par un écrou vissé sur un filetage de la tige de commande.

Les moyens de réaction différée peuvent aussi comprendre un ressort précontraint appuyant la butée contre l'extérieur de la paroi, ce ressort pouvant lui-même prendre appui, à distance de la butée, sur la tige de commande pour rappeler cette tige vers sa position de repos.

D'autres caractéristiques et avantages de l'invention ressortiront clairement de la description qui en est faite ci-après, à titre indicatif et nullement limitatif, en référence aux dessins annexés, dans lesquels:
- la figure 1 est une vue en coupe d'un servomoteur hydraulique traditionnel;
- la figure 2 est une vue en coupe partielle détaillée d'un servomoteur conforme à l'invention; et
- la figure 3 est un diagramme représentant une caractéristique de fonctionnement du servomoteur illustré à la figure 2.

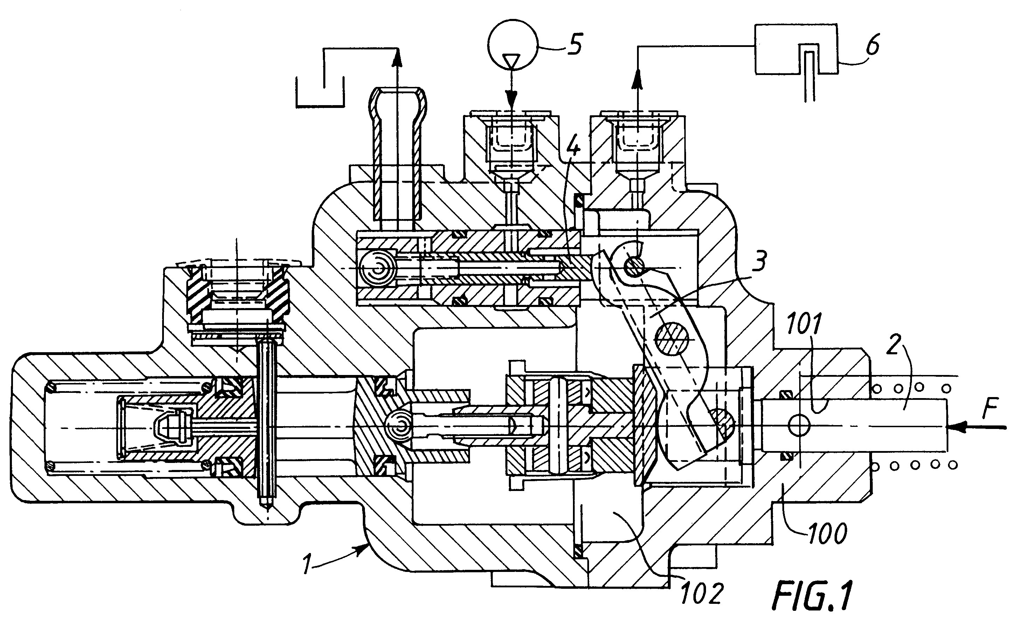

Comme le montre la figure 1, qui illustre seulement le domaine général de l'invention, celle-ci concerne un servomoteur hydraulique d'assistance au freinage pour véhicules à moteurs, comprenant essentiellement un boîtier étanche 1 délimité par au moins une paroi 100.

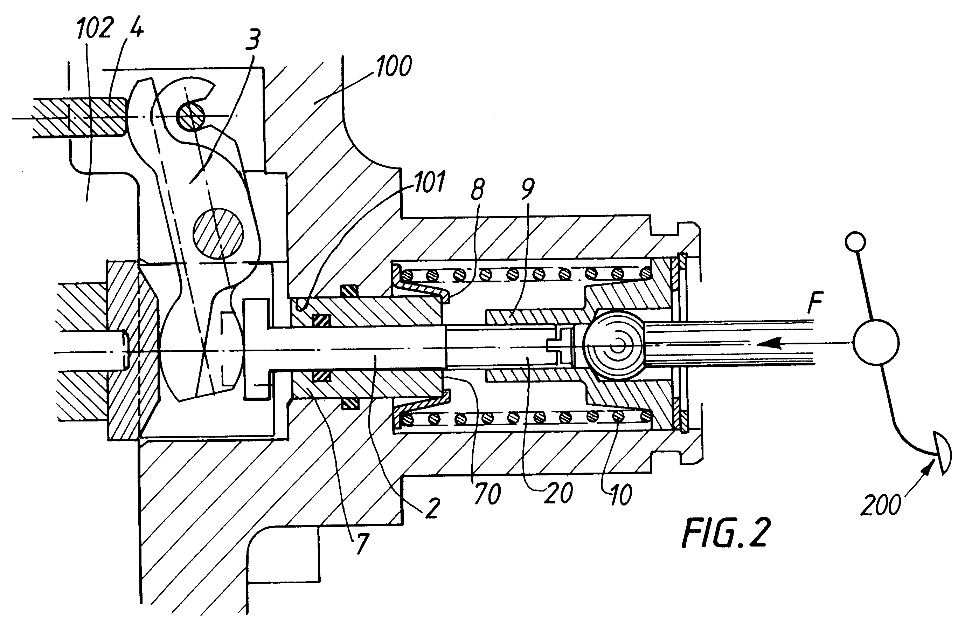

Une tige de commande 2 est montée à coulissement étanche dans une ouverture 101 de cette paroi de manière à pouvoir, à partir d'une position de repos qui est celle que représentent les figures 1 et 2, être enfoncée à l'intérieur 102 du boîtier 1 sous l'effet d'une force d'entrée F, cette force étant appliquée par le conducteur du véhicule sur une pédale de frein 200 représentée sur la figure 2.

De façon bien connue de l'homme de l'art et décrite dans le brevet antérieur US-4 641 497, la tige de commande 2 actionne, à l'intérieur du boîtier 1, un levier 3 qui contrôle la position d'un tiroir 4, ce dernier ouvrant progressivement, au fur et à mesure de son déplacement, une communication entre l'intérieur 102 du boîtier 1 et une source de pression auxiliaire telle qu'une pompe hydraulique 5.

La pression délivrée par cette source 5, et qui est utilisée pour actionner un moteur de frein 6, exerce par ailleurs, sur la tige de commande 2, une réaction qui s'oppose à la force d'entrée F.

L'invention repose sur l'idée qui consiste à obtenir une évolution de cette réaction.

A cette fin, en plus des éléments déjà décrits, le servomoteur de l'invention comprend (figure 2) un manchon cylindrique 7, une butée 8 et des moyens de réaction différée 9, 10, 70 incluant au moins des moyens d'entraînement différé 9, 70.

Le manchon 7 est interposé entre l'ouverture 101 de la paroi 100 et la tige de commande 2 et coulisse de façon étanche par rapport à cette ouverture et à cette tige.

La butée 8 a pour fonction d'opposer une résistance au coulissement du manchon 7 vers l'extérieur du boîtier.

Les moyens d'entraînement différé ont quant à eux pour fonction de permettre à la tige de commande 2, lorsqu'elle a parcouru une course de longueur non nulle depuis sa position de repos, d'entraîner le manchon 7 à l'intérieur du boîtier 1.

Comme le montre la figure 2, les moyens d'entraînement différé comprennent de préférence une face axiale 70 du manchon 7 et un écrou 9 vissé sur un filetage 20 de la tige de commande, ce qui permet, par vissage de cet écrou sur la tige, de régler la course morte M que devra effectuer la tige de commande 2 avant que le levier 3 n'ouvre la communication entre la source 5 et l'intérieur 102 du boîtier 1.

Bien que la figure 2 présente un mode de réalisation différent, la butée 8 peut être solidaire de la paroi 100 du servomoteur.

Dans ce cas, les moyens d'entraînement différé 9, 70 constituent eux-mêmes des moyens de réaction différé, qui permettent en l'occurrence de transmettre à la tige de commande 2 toute la force exercée sur le manchon 7 par la pression régnant à l'intérieur du boîtier 1 dès que ce manchon se trouve entraîné vers l'intérieur de ce boîtier par la tige de commande 2.

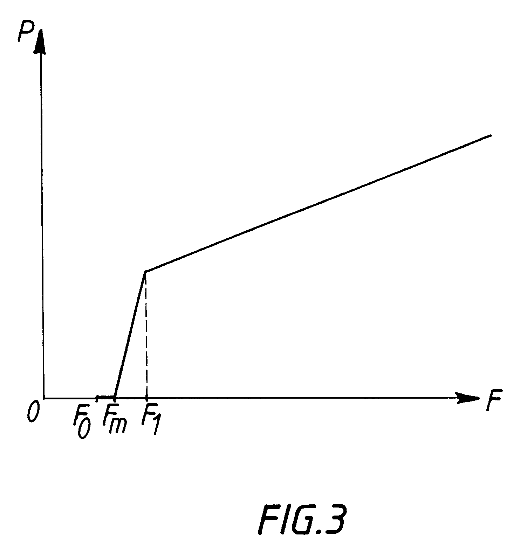

Cependant, comme le montre la figure 2, la butée 8 peut, en variante, être simplement appuyée contre la paroi 100 du servomoteur par un ressort précontraint 10, ce ressort étant susceptible d'intervenir comme moyen supplémentaire dans la réalisation d'une réaction différée, d'une façon qui sera plus précisément exposée en référence à la figure 3.

Ce même ressort 10 peut en outre servir au rappel de la tige de commande 2, une extrémité de ce ressort appuyant sur la butée 8, et l'autre extrémité de ce ressort appuyant sur l'écrou 9, qui est axialement solidaire de la tige 2.

La figure 3 est un diagramme représentant en abscisse la force d'entrée F et en ordonnée la pression de sortie P d'un servomoteur conforme à l'invention, et plus particulièrement du servomoteur illustré à la figure 2.

Lorsque la force F augmente à partir d'une valeur nulle, rien ne se passe aussi longtemps que cette force n'est pas suffisante pour vaincre l'effort Fo exercé par le ressort précontraint 10.

Au delà de cette valeur plancher Fo, la force F déplace la pédale 200 en comprimant le ressort de rappel 10, mais la pression P reste nulle aussi longtemps que la course de la pédale reste inférieure à la course morte M.

Lorsque la pédale 200 a parcouru cette course morte M, ce qui se produit pour une force d'entrée Fm, la pénétration de la tige de commande 2 à l'intérieur 102 du boîtier 1 ne se poursuit que dans la mesure où la force F parvient à vaincre à la fois la force de compression croissante du ressort 10 et la force également croissante mais initialement relativement faible qu'exerce, sur la section de la tige de commande 2, la pression établie dans le servomoteur.

Ce mode de fonctionnement se prolonge à la condition que, et aussi longtemps que, la force exercée par le ressort 10 reste suffisante pour continuer à plaquer la butée 8 contre la paroi 100, à l'encontre de la force exercée par la pression interne du servomoteur sur la section du manchon 7, dont la face axiale 70 tend à repousser la butée 8.

Dès que cette condition cesse d'être satisfaite, ou au plus tard dès que l'écrou 9 entre en contact avec la face axiale 70 du manchon 7, ce qui se produit pour une force d'entrée F1, la pénétration de la tige de commande 2 à l'intérieur 102 du boîtier 1 rencontre désormais une résistance qui correspond à la force qu'exerce la pression établie dans le servomoteur sur la somme des sections de la tige 2 et du manchon 7, l'accroissement de la pression P pour un accroissement donné de la force d'entrée F devenant donc plus faible dès que la force d'entrée dépasse la valeur F1.

La courbe représentée sur la figure 3 étant très voisine de celle qui caractérise un servomoteur pneumatique, l'invention permet donc d'obtenir, avec un servomoteur hydraulique, une sensation pédale très voisine de celle qu'offre un servomoteur pneumatique.

## Revendications

1. Servomoteur hydraulique d'assistance au freinage, comprenant d'une part un boîtier étanche (1) délimité par au moins une paroi (100), et d'autre part une tige de commande (2) montée à coulissement étanche dans une ouverture (101) de cette paroi et susceptible, à partir d'une position de repos, d'être enfoncée à l'intérieur (102) du boîtier sous l'effet d'un force d'entrée (F) pour ouvrir progressivement une communication entre l'intérieur de ce boîtier et une source de pression auxiliaire (5), la pression délivrée par cette source (5) exerçant sur la tige de commande (2) une réaction s'opposant à la force d'entrée (F), caractérisé en ce qu'il comporte en outre : un manchon cylindrique (7) interposé entre l'ouverture (101) de la paroi et la tige de commande (2) et coulissant de façon étanche par rapport à cette ouverture et à cette tige; une butée (8) s'opposant au coulissement du manchon vers l'extérieur du boîtier; et des moyens de réaction différée (9, 10, 70) pour transmettre à la tige de commande, lorsqu'elle a parcouru une course non nulle depuis sa position de repos, une partie au moins de la force exercée sur le manchon (7) par la pression régnant à l'intérieur du boîtier (1).

2. Servomoteur suivant la revendication 1, caractérisé en ce que les moyens de réaction différée comprennent au moins des moyens d'entraînement différé (9, 70) pour permettre à la tige de commande, lorsqu'elle a parcouru une course de longueur non nulle depuis sa position de repos, d'entraîner le manchon (7) à l'intérieur du boîtier (1).

3. Servomoteur suivant la revendication 2, caractérisé en ce que les moyens d'entraînement différé comprennent un écrou vissé sur un filetage (20) de la tige de commande.

4. Servomoteur suivant l'une quelconque des revendications précédentes, caractérisé en ce que les moyens de réaction différée (9, 10) comprennent un ressort précontraint (10) appuyant la butée (8) contre l'extérieur de la paroi (100).

5. Servomoteur suivant la revendication 4, caractérisé en ce que le ressort (10) prend lui-même appui, à distance de la butée 8, sur la tige de commande (2).

## Claims

1. Hydraulic brake booster, comprising, on the one hand, a leak-tight casing (1) delimited by at least one wall (100) and, on the other hand, a control rod (2) mounted with leak-tight sliding in an opening (101) in this wall and capable, starting from a position of rest, of being driven inside (102) the casing under the effect of an input force (F) in order to open progressively a communication between the inside of this casing and an auxiliary source (5) of pressure, the pressure delivered by this source (5) exerting on the control rod (2) a reaction which opposes the input force (F) , characterized in that it further includes: a cylindrical sleeve (7) interposed between the opening (101) in the wall and the control rod (2) and sliding in a leak-tight fashion with respect to this opening and to this rod; a limit stop (8) opposing the sliding of the sleeve towards the outside of the casing; and delayed reaction means (9, 10, 70) for transmitting to the control rod, when it has covered a non-zero travel from its position of rest, at least some of the force exerted on the sleeve (7) by the pressure prevailing inside the casing (1).

2. Booster according to Claim 1, characterized in that the delayed-reaction means comprise at least delayed-entrainment means (9, 70) in order to allow the control rod, when it has covered a travel of non-zero length starting from its position of rest, to entrain the sleeve (7) into the casing (1).

3. Booster according to Claim 2, characterized in that the delayed-entrainment means comprise a nut screwed onto a screw thread (20) of the control rod.

4. Booster according to any one of the preceding Claims, characterized in that the delayed-reaction means (9, 10) comprise a preloaded spring (10) pressing the limit stop (8) against the outside of the wall (100).

5. Booster according to Claim 4, characterized in that the spring (10) itself bears, some distance from the limit stop 8, on the control rod (2).

## Patentansprüche

1. Hydraulischer Bremsunterstützungs-Servomotor, der zum einen ein dichtes Gehäuse (1), das von wenigstens einer Wand (100) abgegrenzt wird, und zum anderen eine Steuerstange (2) aufweist, die in dichter Weise verschiebbar in einer Öffnung (101) dieser Wand angebracht ist und ausgehend von einer Ruhestellung in das Innere (102) des Gehäuses unter der Wirkung einer Eingangskraft (F) eingedrückt werden kann, um progressiv eine Verbindung zwischen dem Inneren des Gehäuses und einer Hilfsdruckquelle (5) zu öffnen, wobei der von dieser Quelle (5) gelieferte Druck auf die Steuerstange (2) eine Reaktion ausübt, die der Eingangskraft (F) entgegenwirkt, dadurch gekennzeichnet, daß er außerdem enthält: eine zylindrische Hülse (7), die zwischen der Öffnung (101) der Wand und der Steuerstange (2) angeordnet ist und in dichter Weise bezüglich dieser Öffnung und dieser Stange verschiebbar ist; einen Anschlag (8), der einer Verschiebung der Hülse zum Äußeren des Gehäuses hin entgegenwirkt; sowie unterschiedliche Reaktionsmittel (9, 10, 70), um auf die Steuerstange, wenn diese einen von Null verschiedenen Weg aus ihrer Ruhestellung heraus zurückgelegt hat, wenigstens einen Teil der von dem im Inneren des Gehäuses (1) herrschenden Druck auf die Hülse (7) ausgeübten Kraft (7) zu übertragen.

2. Servomotor nach Anspruch 1, dadurch gekennzeichnet, daß die unterschiedlichen Reaktionsmittel wenigstens unterschiedliche Mitnahmemittel (9, 70) enthalten, um der Steuerstange, wenn sie ausgehend von ihrer Ruhestellung einen Weg mit einer von Null verschiedenen Länge zurückgelegt hat, zu ermöglichen, die Hülse (7) zum Inneren des Gehäuses (1) hin mitzunehmen.

3. Servomotor nach Anspruch 2, dadurch gekennzeichnet, daß die unterschiedlichen Mitnahmemittel eine Mutter enthalten, die auf ein Gewinde (20) der Steuerstange aufgeschraubt ist.

4. Servomotor nach einem der vorhergehenden Ansprüche, dadurch gekennzeichnet, daß die unterschiedlichen Reaktionsmittel (9, 10) eine vorgespannte Feder (10) enthalten, die den Anschlag (8) gegen das Äußere des Gehäuses (100) drückt.

5. Servomotor nach Anspruch 4, dadurch gekennzeichnet, daß sich die Feder (10) ihrerseits im Abstand von dem Anschlag (8) an der Steuerstange (2) abstützt.
